(19)

**Europäisches Patentamt**
**European Patent Office**
**Office européen des brevets**

(11)    **EP 4 173 487 B1**

(12)    **EUROPEAN PATENT SPECIFICATION**

(45) Date of publication and mention
of the grant of the patent:
**11.03.2026  Bulletin 2026/11**

(21) Application number: **22200551.4**

(22) Date of filing: **10.10.2022**

(51) International Patent Classification (IPC):
***A21C 11/10*** (2006.01)        ***A21C 11/16*** (2006.01)

(52) Cooperative Patent Classification (CPC):
**A21C 11/16; A21C 11/10**

(54)    **AN APPARATUS FOR FORMING PIECES OF FOOD DOUGH**

VORRICHTUNG ZUR HERSTELLUNG VON TEIGSTÜCKEN

APPAREIL POUR FORMER DES MORCEAUX DE PÂTE ALIMENTAIRE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.10.2021  JP 2021176004**

(43) Date of publication of application:
**03.05.2023  Bulletin 2023/18**

(73) Proprietor: **Rheon Automatic Machinery Co., Ltd.
Utsunomiya-shi, Tochigi 320-0071 (JP)**

(72) Inventors:
• **Seki, Minoru
Utsunomiya-shi, Tochigi-ken (JP)**

• **Shirai, Sorae
Utsunomiya-shi, Tochigi-ken (JP)**
• **Sato, Ikutoshi
Utsunomiya-shi, Tochigi-ken (JP)**

(74) Representative: **Beyer, Andreas
Wuesthoff & Wuesthoff
Patentanwälte und Rechtsanwalt PartG mbB
Schweigerstrasse 2
81541 München (DE)**

(56) References cited:
**EP-A1- 3 395 174      WO-A1-2016/199642
JP-B1- 6 166 494      JP-B2- 4 274 569
US-A- 3 314 381      US-A- 4 687 429
US-A- 5 123 830**

EP 4 173 487 B1

**Description**

Field of the Invention

The invention relates to an apparatus for forming pieces of food dough by cutting the food dough extruded through a nozzle. Particularly, it relates to an apparatus for forming the pieces of the food dough that has a simple mechanism and can form the pieces of the food dough having an enough uniformity of thickness.

Background of the Invention

Conventionally, in the field of manufacturing foods, such as cookies, designed confectioneries having geometric configurations or forms of animal faces are manufactured, and various types of apparatuses for forming such pieces of food dough by cutting the food dough extruded through a nozzle have been proposed. The apparatus disclosed in Patent Document 1 includes an extruding device and a cutting device. The extruding device includes a nozzle for continuously extruding food dough in a downward direction. The cutting device includes a cutting blade for cutting pieces of food dough from the food dough, a moving mechanism to move the cutting blade forward from an initial position, then to move the cutting blade downward, and then to move the cutting blade back to the initial position, and a carrying-out conveyor moving in the same direction as that of forward movement of the cutting blade.

The apparatus disclosed in Patent Document 2 includes a pair of extruding rollers, a dough hopper having a trimming die, an endless belt, and a cutter. The apparatus further includes a lifting-and-lowering mechanism to lift and lower the dough hopper and the endless belt separately so that the distance between the trimming die and the endless belt can correspond to a thickness of a confectionery production. Further, the apparatus includes a control mechanism to locate the cutter to cut the extruded confectionery dough having a predetermined thickness so as to reciprocate close to the trimming die, to control the distance between the trimming die of the dough hopper and the endless belt so that the distance correspond to the thickness of the confectionery production when the confectionery dough is extruded, and to maintain the distance during the cutting process by the cutter.

US 4 687 429 A discloses a co-extrusion apparatus in which two dissimilar materials are simultaneously extruded from respective extruder outlets.

WO 2016/199642 A1 discloses an apparatus for forming a food dough piece. The apparatus includes an inner nozzle and an outer nozzle.

JP 4 274 569 B2 discloses an apparatus for extruding a food material cooked from meat, vegetables or the like. The apparatus includes a nozzle and a rotating member coaxially arranged in the nozzle.

JP 6 166 494 B1 discloses a base that ensures the filling of the food so that the inner bottom surface of the molded cup-shaped dough becomes a substantially flat surface, and prevents a part of the cup inner bottom surface from being exposed to the outside.

US 3 314 381 A discloses an apparatus for the shaping and filling of dough pieces in the production of baked products. The apparatus includes an extrusion nozzle. The nozzle includes a funnel section connected to a discharge opening. A fluid injection member is arranged at the upstream side of the funnel section for injecting fluid such as a fat or oil, a cinnamon flavoring composition or any desired fluid material, solution or suspension.

US 5 123 830 A discloses a dough portioning machine which includes a cutter that can operate at exceptionally high rates while maintaining equal dough portions and minimizing heat and gluten damage. A conduit connects the outlet end of degasser to a cylindrical chamber which receives degassed dough from each of the four degassers. A paddle is mounted for rotation in chamber and is rotatable by a motor. The paddle serves to texturize the dough in the chamber to a consistency satisfactory to the baker.

EP 3 395 174 A1 discloses a cutting apparatus for a dough extrusion machine, comprising a base body having a plurality of openings for the passage of dough and a first cutting plate arranged adjacent to the base body and a second cutting plate arranged adjacent to the first cutting plate. The cutting apparatus comprises a base body having a plurality of openings for the passage of dough, a first cutting plate arranged adjacent to the base body and a second cutting plate arranged adjacent to the first cutting plate.

Prior Art

Patent Documents

Patent Document 1:International Publication No.
WO 2016/199642

Patent Document 2:Japanese Patent Laid-openPublication No. S59-151829

Summary of the Invention

Problems to be Solved by the Invention

In the apparatus disclosed in Patent Document 1, although the apparatus has a simple mechanism, there is a problem that pieces of food dough having an enough uniformity of thickness cannot be formed when the pieces of the food dough are formed by cutting the food dough extruded through the nozzle.

The apparatus disclosed in Patent Document 2 can form the confectionery production having a certain level of an uniformity of thickness. However, the apparatus needs to control the vertical positions of the dough hopper and the endless belt so that the distance between the trimming die of the dough hopper and the endless belt coincides with the thickness of the confectionery production. Thus, there are problems that the structure of the apparatus becomes very complicate and large and that the handling operation of the apparatus is difficult.

The purpose of the invention is to solve the problems explained above and to provide the apparatus for forming pieces of food dough that has a simple mechanism and can form the pieces of the food dough having an enough uniformity of thickness when the pieces of the food dough are formed by cutting the food dough extruded from an extruding device by means of a cutting device.

Means of Solving the Problems

The invention relates to an apparatus for forming pieces of food dough as set forth in claim 1. The apparatus in an embodiment comprises:

an extruding device to extrude the food dough, and
a cutting device to cut the pieces of the food dough, wherein the extruding device comprises a passage to feed the food dough,
wherein the passage comprises an upstream passage having a cross-sectional shape perpendicular to a moving direction of the food dough that becomes narrower from the upstream towards the downstream of the upstream passage and
a downstream passage that is connected to the exit of the upstream passage, which corresponds to the downstream end of the upstream passage, has a constant cross-sectional shape, and extends to the extruding port of the extruding device,
wherein the length of the downstream passage in the moving direction of the food dough is longer than the maximum distance in a straight line of the extruding port.

Further, the invention has the following characteristics:
the extruding device comprises an extruding nozzle, and the downstream passage is formed in the extruding nozzle.
Further, the invention has the following characteristics:
the upstream passage is formed in the extruding nozzle.
Further, the invention has the following characteristics:
the length of the downstream passage in the moving direction of the food dough is longer than the length of the upstream passage in the moving direction of the food dough.
Further, the invention has the following characteristics:
the passage comprises a flow straightener to straighten the flow of the food dough that is disposed at the upstream side of the upstream passage.
Further, the invention has the following characteristics:
the flow straightener is a thin plate-like filter that is disposed so as to cross the passage and has a plurality of holes.
Further, the invention has the following characteristics:
the extruding device comprises a second extruding nozzle to extrude a second food dough that is disposed in the passage.
Further, the invention has the following characteristics:
the exit of the second extruding nozzle to extrude the second food dough is disposed inside the downstream passage.
Further, the invention has the following characteristics:
the cutting device comprises a cutting blade to cut the food dough into the pieces of the food dough and a moving mechanism to move the cutting blade forward from an initial position, then to move the cutting blade downward, and then to move the cutting blade back to the initial position.
Further, the invention has the following characteristics:
the cutting blade is an ultrasonic-vibrating cutter.

Further, the invention has the following characteristics:
the apparatus further comprises:

> a fixing mechanism to combine the extruding device and the cutting device;
> a detecting device to detect that the extruding device and the cutting device are combined; and
> a controlling system to control to allow to drive the extruding device and the cutting device when the detecting device transmits a detecting signal.

Effects of the Invention

According to the invention, as well as having a simple mechanism, the apparatus for forming the pieces of the food dough can form the pieces of the food dough having enough uniformity of thickness when the pieces of the food dough are formed by cutting the food dough extruded from the extruding device by means of the cutting device.

Brief Description of the Drawings

[Fig. 1] Fig. 1 shows an illustrative front view of an apparatus for forming pieces of food dough of a first embodiment of the invention.
[Fig. 2] Fig. 2 shows an illustrative cross-sectional view of a part of a nozzle unit of the first embodiment of the invention.
[Fig. 3] Fig. 3 shows an illustrative plan view of an example of a shape of an exit of an extruding nozzle of the first embodiment of the invention.
[Fig. 4] Fig. 4 shows an illustrative cross-sectional view showing a forming process by the apparatus for forming the pieces of the food dough of the first embodiment of the invention.
[Fig. 5] Fig. 5 shows an illustrative cross-sectional view showing a forming process by a conventional apparatus.
[Fig. 6] Fig. 6 shows an illustrative front view of an apparatus for forming pieces of food dough of a second embodiment of the invention.
[Fig. 7] Fig. 7 shows an illustrative cross-sectional view of a part of a nozzle unit (a combining nozzle) of the second embodiment of the invention.
[Fig. 8] Fig. 8 shows an illustrative cross-sectional view showing a forming process by the apparatus for forming the pieces of the food dough of the second embodiment of the invention.
[Fig. 9] Fig. 9 shows an illustrative front view of an apparatus for forming pieces of food dough of a third embodiment of the invention.
[Fig. 10] Fig.10 shows an illustrative view to explain the definition of an uniformity of thickness of the pieces of the food dough of the invention.

Detailed Description of the Embodiments

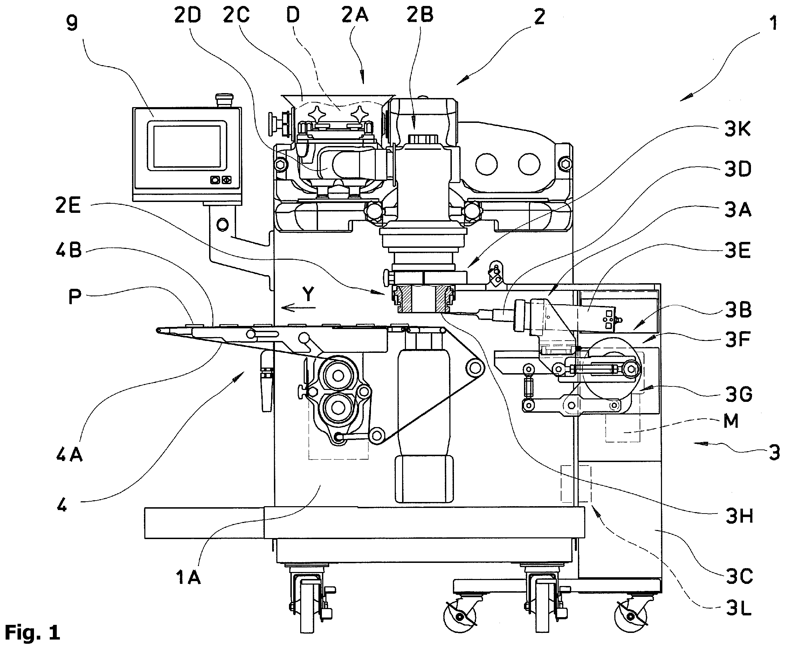

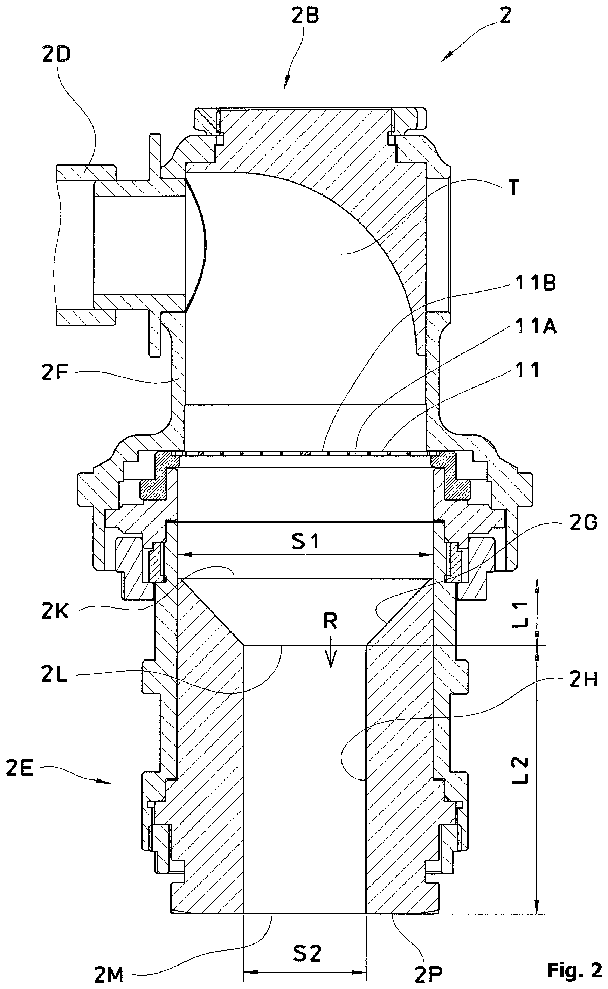

Based on Figs 1-3, an apparatus 1 for forming pieces of food dough of a first embodiment of the invention is explained below. In the following descriptions, detailed explanations of constitutions that have already become publicly known are omitted.

The apparatus 1 for forming the pieces of the food dough is used to cut food dough D into thin pieces P of food dough. In the first embodiment, cookie dough as the food dough D and pieces of food dough having a thin disk-like shape as the pieces P are explained.
The apparatus 1 comprises a box-type frame 1A, an extruding device 2, a cutting device 3, a conveyor 4, and a controlling system 9.

The extruding device 2 that continuously extrudes the food dough D downward comprises a supplying device 2A disposed on the frame 1A to supply the food dough D and a nozzle unit 2B disposed at the front of the frame 1A. The supplying device 2A comprises a hopper 2C having a screw (not shown in figs.) rotatably disposed in the lower part of the hopper 2C and a pump 2D connected to the downstream side of the hopper 2C. The hopper 2C and the pump 2D are removably disposed at the frame 1A. The outlet port of the pump 2D is connected to the inlet port of the nozzle unit 2B. The nozzle unit 2B has an outer cylinder 2F and an extruding nozzle 2E and removably disposed at the frame 1A. In the nozzle unit 2B, a passage T for the food dough D is formed from the inlet port to an extruding port 2M of the nozzle unit 2B. The extruding nozzle 2E is removably disposed at the lower part of the outer cylinder 2F.

The extruding nozzle 2E has a hollow and cylindrical shape, and a planate lower surface 2P is formed at the distal end of the cylindrical shape.
The extruding nozzle 2E has an upstream passage 2G formed at the upstream side in the moving direction R of the food dough D and a downstream passage 2H connected to the upstream passage 2G. The upstream passage 2G and the downstream passage 2H form a downstream section that is a part of the passage T to feed the food dough D.

The lower surface 2P and the passage T to feed the food dough D (corresponding to the moving direction R of the food dough D) are disposed so as to be perpendicular to each other. At the lower surface 2P, the extruding port 2M that is the distal end of the downstream passage 2H is formed.

The upstream passage 2G is formed from an entrance 2K of the upstream passage 2G to an entrance 2L of the downstream passage 2H (an exit of the upstream passage 2G). The cross-sectional surface of the entrance 2K of the upstream passage 2G, which is perpendicular to the moving direction R of the food dough D, has a circular shape having a diameter S1. The cross-sectional surface of the entrance 2L of the downstream passage 2H has a circular shape having a diameter S2. The diameter S2 is smaller than the diameter S1, and the upstream passage 2G has a circular truncated cone shape (a tapered shape) so that the area of the cross-sectional surface perpendicular to the moving direction R of the food dough D decreases toward the downstream side. The length of the upstream passage 2G in the moving direction R of the food dough D is defined as L1.

The extruding port 2M has the shape corresponding to the planar shape of the pieces P of the food dough. In the first embodiment, the shape of the extruding port 2M is a circle having a diameter S2.

The cross-sectional surface of the downstream passage 2H, which is perpendicular to the moving direction R of the food dough D, maintains the same shape as that of the extruding port 2M, from the extruding port 2M to the entrance 2L of the downstream passage 2H, and the downstream passage 2H forms a cylindrical shape. The length of the downstream passage 2H in the moving direction R of the food dough D is defined as L2.

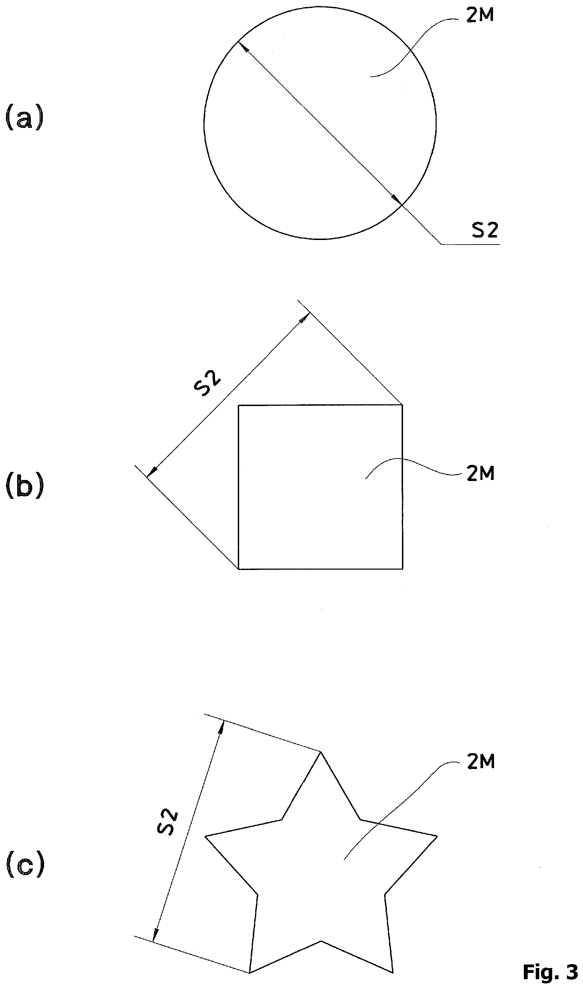

In this specification, the longest distance in a straight line between one point on a peripheral border of the extruding port 2M and another point on that is defined as "a maximum distance in a straight line of the extruding port 2M." In the first embodiment, as shown in Fig. 3(a), since the shape of the extruding port 2M is the circle having the diameter S2, the maximum distance in the straight line of the extruding port 2M corresponds to the diameter S2.

The shape of the extruding port 2M is not limited to the circle. The shape other than the circle can be used for the extruding port 2M according to the shape of the pieces P of the food dough.

For example, as shown in Fig. 3(b), if the shape of the extruding port 2M is a rectangle, the maximum distance in the straight line of the extruding port 2M corresponds to the length 2S of the diagonal line. Further, as shown in Fig. 3(c), if the extruding port 2M has a starlike shape, the maximum distance in the straight line of the extruding port 2M corresponds to the distance 2S between the two points shown in Fig. 3(c).

In the first embodiment, the length L1 of the upstream passage 2G in the moving direction R is shorter than the length L2 of the downstream passage 2H. Further, the length L2 of the downstream passage 2H is longer than the maximum distance S2, which corresponds to the diameter S2, in the straight line of the extruding port 2M.

In the outer cylinder 2F, a filter 11, which is a flow straightener, is disposed at the upstream side of the extruding nozzle 2E of the passage T of the food dough D, so as to cross the passage T to feed the food dough D.

The filter 11 is used to straighten the flow of the food dough D so that the flow rate and the density of the food dough D become uniform, and is used to flow the food dough D toward the downstream side. The filter 11 has a thin plate-like and circular shape and a plurality of holes 11A for passing the food dough D. The plurality of the holes 11A have the same diameter and are located concentrically around the center of the filter 11.

In the first embodiment, the ratio of the area of the cross-section of the passage T at the upstream side of the filter 11 to the total area of the plurality of the holes 11A is about 2 to 1. The shape of the filter 11 is not limited to such shape. The shape, number, dimension, and position of the holes 11A can be selected according to properties of the food dough D. A filter having a mesh texture can be used in place of the filter having the holes 11A.

The cutting device 3 is used to cut the food dough D extruded from the extruding port 2M of the extruding nozzle 2E into the pieces P of the food dough. The cutting device 3 comprises an ultrasonic-vibrating cutter 3A, a moving mechanism 3B, and a base mounting 3C. The ultrasonic-vibrating cutter 3A comprises a cutting blade 3D, which corresponds to an ultrasonic-vibrating horn, and a vibrator 3E, as a unit. The cutting blade 3D has a cutting edge 3H.

The moving mechanism 3B comprises a moving backward-and-forward mechanism 3F to move the ultrasonic-vibrating cutter 3A backward and forward and a lifting-and-lowering mechanism 3G to lift and lower the ultrasonic-vibrating cutter 3A. The moving backward-and-forward mechanism 3F has a crank mechanism, and the lifting-and-lowering mechanism 3G has a cam mechanism. The moving backward-and-forward mechanism 3F and the lifting-and-lowering mechanism 3G are synchronously driven by a driving motor M.

The cutting blade 3D moves forward along the lower surface 2P of the extruding nozzle 2E from an initial position, then moves downwardly, and then moves back to the initial position, by means of the moving backward-and-forward mechanism 3F and the lifting-and-lowering mechanism 3G. Thus, the cutting blade 3D cuts the food dough D in the direction perpendicular to the moving direction R of the food dough D. The base mounting 3C comprises a fixing mechanism 3K to combine the extruding device 2 and the cutting device 3 and assemble them. The fixing mechanism 3K fixes them by holding the periphery of the extruding nozzle 2E of the nozzle unit 2B. Since the constitution of the cutting device 3 is well known, the detailed explanation of it is omitted.

A detecting device 3L to detect that the extruding device 2 and the cutting device 3 are combined together is disposed at the extruding device 2 and the cutting device 3. A well-known detecting device 3L, such as a sensor type or a switch type, can be used. When the cutting device 3 is combined with the extruding device 2, the detecting device 3L transmits a detecting signal to the controlling system 9, and becomes in a sensing state, then the controlling system 9 controls the apparatus 1 (the extruding device 2 and the cutting device 3) so as to be driven. Conversely, when the cutting device 3 and the extruding device 2 are separated from each other, the detecting device 3L becomes in the non-sensing state, then the controlling system 9 stops all the devices. Thus, it is beneficial in view of safety to equip the detecting device 3L.

The conveyor 4 is a type of a belt conveyor, which is disposed under the extruding nozzle 2E and carries the pieces P of the food dough in the carrying direction Y by rotating the endless conveyor belt 4A. In the first embodiment, the lower surface 2P of the extruding nozzle 2E and the carrying surface 4B of the conveyor 4 are disposed so as to be parallel to each other. Further, the direction of the forward movement of the cutting blade 3D corresponds to the carrying direction Y of the conveyor 4. Since the constitution of the conveyor 4 is well known, the detailed explanation of it is omitted.

Next, based on Figs. 1, 2, and 4, processes for forming the pieces P of the food dough by means of the apparatus 1 of the first embodiment are explained below.

When the extruding device 2 is driven after the food dough D is poured in the hopper 2C of the extruding device 2, the food dough D is fed into the passage T in the nozzle unit 2B from the hopper 2C through the pump 2D. When the food dough D passes through the curved section of the passage T, which is located at the upper side of the nozzle unit 2B, the flow rate and the density of the food dough D, varies according to location in the passage T. The food dough D fed by means of the pump 2D comes up against the upstream surface 11B of the filter 11, and the flow of the food dough D is blocked with the filter 11. The pressure to the blocked food dough D increases since the blocked food dough D is pushed by the following food dough D. Thus, the food dough D is extruded toward the downstream side of the filter 11 through the holes 11A. Then, the food dough D is pressed evenly and uniformly. For that reason, the food dough D is uniformly extruded through almost all holes 11A like a thin string. Thus, the flow of the food dough D is straightened so as to have uniform flow rate and density and fed toward the extruding nozzle 2E.

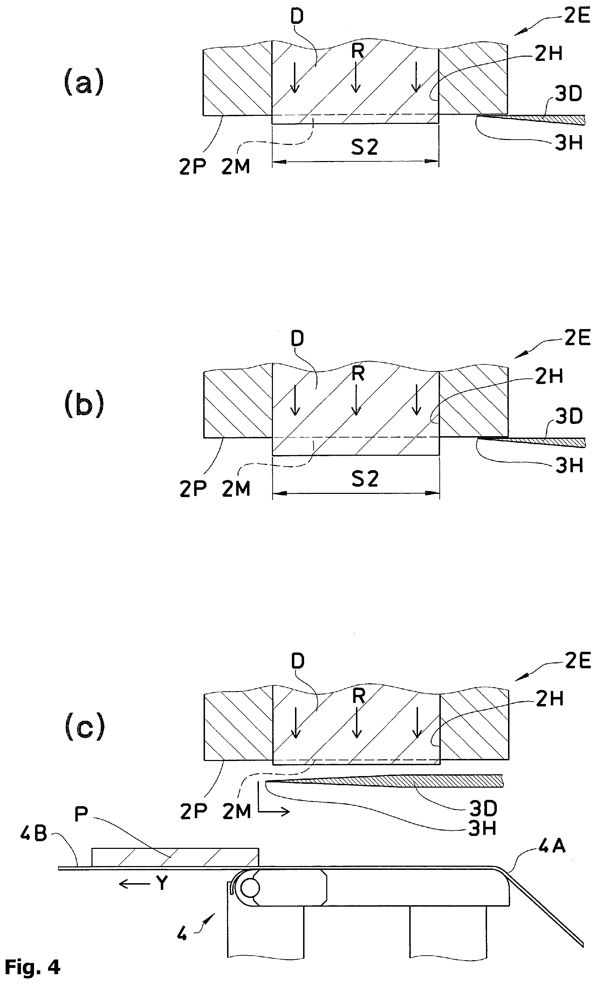

The food dough D is fed toward the entrance 2L of the downstream passage 2H (the exit of the upstream passage 2G) from the entrance 2K of the extruding nozzle 2E through the upstream passage 2G. Then, the food dough D is extruded from the extruding port 2M through the entrance 2L and the downstream passage 2H (see Fig. 4(a).). As explained above, the upstream passage 2G has the tapered shape so that the area of the cross-sectional surface of the upstream passage 2G decreases toward the entrance 2L of the downstream passage 2H. Thus, since the food dough D that is fed from the entrance 2K of the upstream passage 2G and has the shape like a plurality of the thin string is compressed, and since the pressure to the food dough D increases, the food dough D is combined all together again. When the food dough D passes through the upstream passage 2G, the food dough D is compressed. Thus, the food dough D is elastically deformed when entering into the downstream passage 2H. While the food dough D passes the downstream passage 2H, the elastic deformation decreases, then the food dough D is extruded from the extruding port 2M. For that reason, the food dough D is extruded from the extruding port 2M so as to have the shape nearly identical to that of the extruding port 2M without expanding in a radial direction (see Fig. 4(b).). To reduce the elastic deformation of the food dough D, it is preferable that the length L2 of the downstream passage 2H in the moving direction R is longer than the maximum distance in the straight line of the extruding port 2M, which corresponds to the diameter S2. Further, the effect for reducing the elastic deformation increases, when the length L2 of the downstream passage 2H in the moving direction R is twice longer than the maximum distance in the straight line of the extruding port 2M, which corresponds to the diameter S2.

Further, it is preferable that the extruding nozzle 2E is formed by a material having minimal coefficient of friction for the food dough D. This will enable to reduce the friction drag, which affects the food dough D at the inner surface of the downstream passage 2H. Thus, since the difference of the flow rate in the direction perpendicular to the moving direction R of the food dough D is reduced, the food dough D is extruded from the extruding port 2M with nearly identical flow rate at everywhere of the extruding port 2M. Consequently, the food dough D is extruded from the extruding port 2M, while maintaining the flat surface of the distal end of the food dough D (see Fig. 4(b).).

Then, the food dough D extruded from the extruding port 2M is cut with desired thickness by the cutting blade 3D of the cutting device 3, and the pieces P of the food dough are formed. At the initial state of the cutting process, the cutting blade 3D stands by at the initial position. At the initial position, the cutting blade 3D is disposed so that the cutting edge 3H of the cutting blade 3D is located under the lower surface 2P of the extruding nozzle 2E so as to have a little space between them. Then, the space between the cutting edge 3H and the lower surface 2P is set less than 1 mm, and it is preferable that the space between them is set within 0.3 mm - 0.5 mm. The cutting blade 3D horizontally moves along the lower surface 2P from the initial position to the forward end, and cuts the extruded food dough D into the pieces P. The cutting blade 3D, which completes the cutting process and moves to the forward end, descends to the lowest position at the speed faster than the descending speed of the food dough D extruded from the extruding port 2M and returns to the initial position. Thus, since the cutting blade 3D can return to the initial position without contacting with the food dough D continuously extruded from the extruding port 2M, the shape of the pieces P is not deformed.

The pieces P of the food dough fall while moving in the carrying direction Y by a thrust generated by means of the cutting blade 3D moving forward, and are laid on the carrying surface 4B of the conveyor 4. Then, since the pieces P fall while moving horizontally, the deformation of the shape of the pieces P is prevented when the pieces P are laid on the carrying surface 4B moving in the same direction. The pieces P laid on the conveyor belt 4A are carried in the carrying direction Y.

Since the food dough D is cut by the cutting device 3 while having the same cross-sectional shape as that of the extruding port 2M and having the flat surface at the distal end of the food dough D, as explained above, the pieces P having nearly uniform thickness can be formed (see Fig. 4(c).).

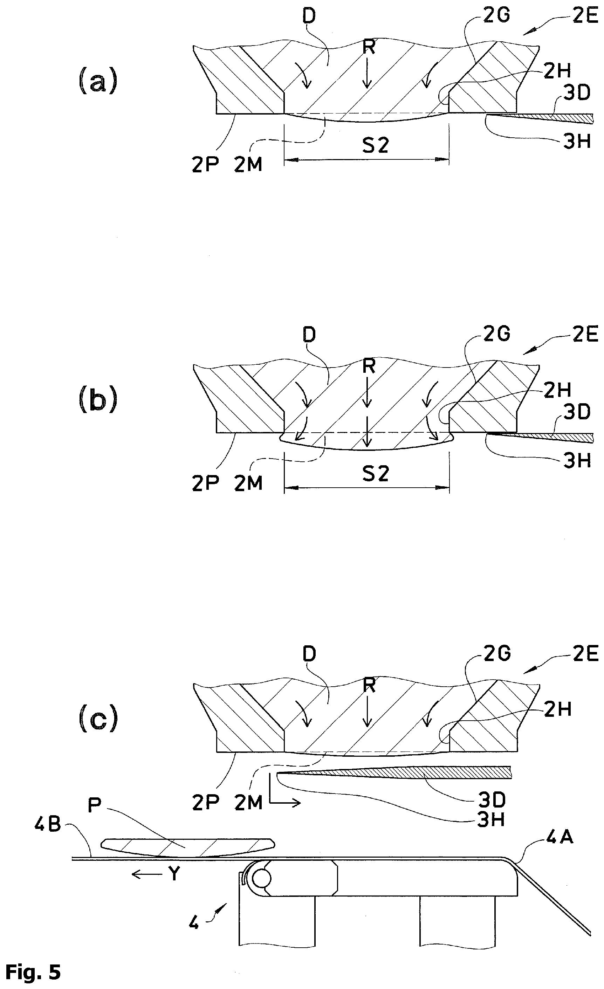

Fig. 5(a) - (c) shows the outline of the cutting process by a conventional apparatus (for example, the apparatus disclosed in Patent Document 1) that extrudes food dough from an extruded port and cuts it into pieces.

In the conventional apparatus, if the length L2 of the downstream passage 2H is not long enough, the food dough that is compressed while passing through the upstream passage 2G and is elastically deformed when entering into the downstream passage 2H is extruded from the extruding port 2M without decreasing the elastic deformation while passing the downstream passage 2H. Thus, the food dough D expands in a radial direction, when the food dough D is extruded from the extruding port 2M (see Fig. 5(b).).

Then, since the central part of the food dough D is extruded faster than the peripheral part of the food dough D, the food dough D is extruded and cut while keeping the shape so that the central part of the food dough D is protruded downward. Thus, the cut pieces P are formed so that the central parts of the pieces P become thick and the peripheral parts of them become thin (see Fig. 5(c).).

The cut pieces P are laid on the carrying surface 4B of the conveyor 4 while keeping the shape so that the lower surfaces of the central parts of the pieces P are protruded downward. While the pieces P are carried by the conveyor 4, since the peripheral parts of the pieces P that are floated from the carrying surface 4B descend, the lower surfaces of the pieces P become flat along the carrying surface 4B, and the upper surfaces of the central parts of the pieces P protrude upward, the beauty of the appearance of the pieces P is impaired.

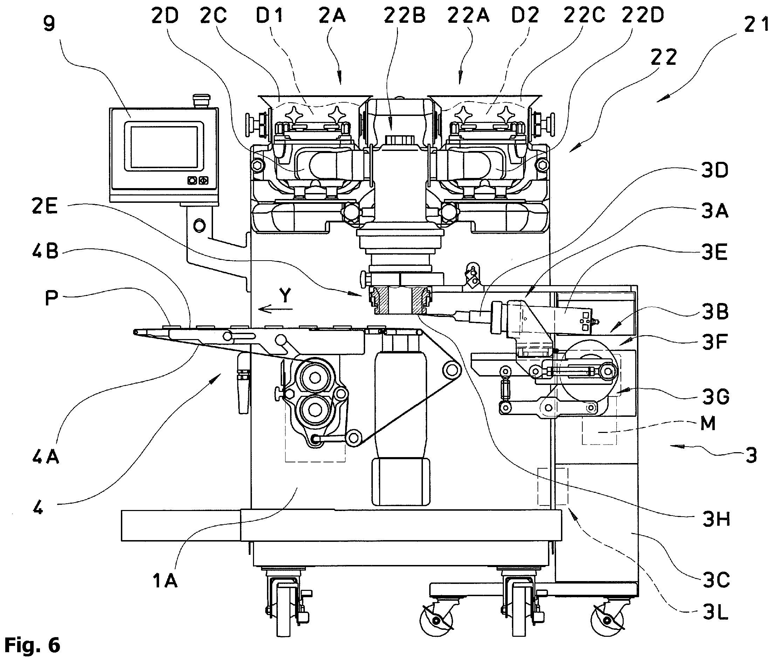

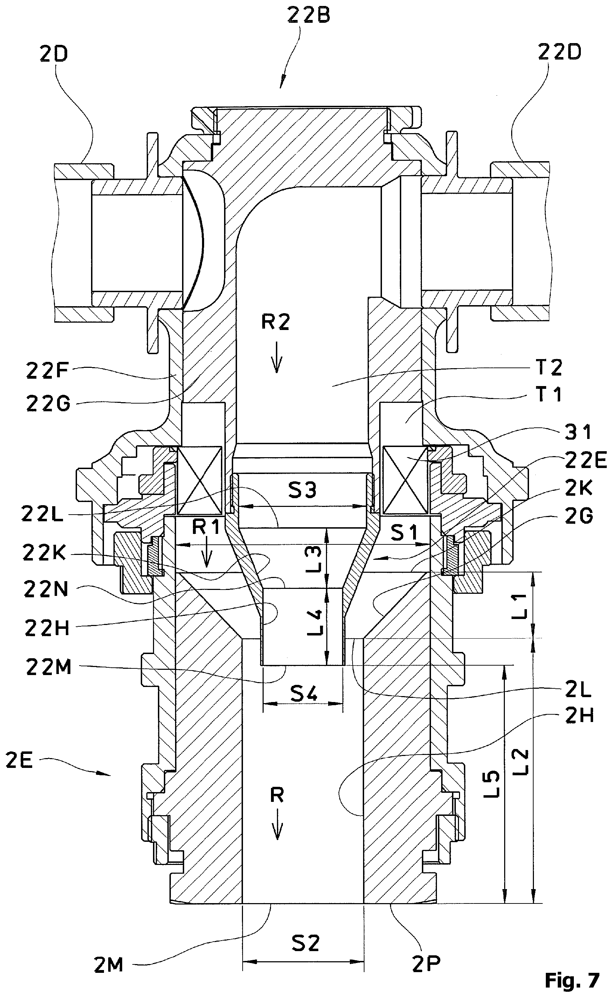

Next, based on Figs. 6 and 7, an apparatus 21 of a second embodiment of the invention is explained below.

The denotations as used in the above explanation are used for the corresponding constituent objects, and the overlapping explanations are omitted.

The apparatus 21 for forming pieces of food dough is used to cut food dough D that includes a first food dough D1 and a second food dough D2 into thin pieces P2 of the food dough. The pieces P2 explained in the second embodiment are pieces of cookie dough having a thin disk-like shape and formed so that the second food dough D2 is surrounded with the first food dough D1 as viewed from above.

The apparatus 21 for forming the pieces of food dough comprises a box-type frame 1A, an extruding device 22 to extrude the food dough D, a cutting device 3, a conveyor 4, and a controlling system 9.

The extruding device 22 comprises a first supplying device 2A to supply the first food dough D1, a second supplying device 22A to supply the second food dough D2, and a combining nozzle 22B, which is a nozzle unit connected to the first and the second supplying devices 2A and 22A.

The second supplying device 22A comprises a hopper 22C having a screw (not shown in figs.) rotatably disposed in the lower part of the hopper 22C and a pump 22D connected to the downstream side of the hopper 22C. The hopper 22C and the pump 22D are removably disposed at the frame 1A.

The combining nozzle 22B has an outer cylinder 22F and an inner cylinder 22G, which is disposed inside the outer cylinder 22F, and they are disposed concentrically. The outlet port of the pump 22D is connected to the inlet port of the combining nozzle 22B, and a passage T1 for the first food dough D1 is formed from the inlet port to an extruding port 2M of the combining nozzle 22B through the space between the outer cylinder 22F and the inner cylinder 22G. Further, the outlet port of the pump 22D is connected to the inlet port of the inner cylinder 22G, and a passage T2 for the second food dough D2 is formed from the inlet port of the combining nozzle 22B to an extruding port 22M of an extruding nozzle 22E, which is disposed at the exit of the inner cylinder 22G, through inside of the inner cylinder 22G.

In the extruding nozzle 22E, an upstream passage 22K and a downstream passage 22H connected to the upstream passage 22K form a downstream section that is a part of the passage T2 of the food dough D2. At the lower surface 22P of the extruding nozzle 22E, an extruding port 22M, which corresponds to a distal end of the downstream passage 22H, is formed.

The upstream passage 22K is formed from the entrance 22L of the upstream passage 22K to the entrance 22N of the downstream passage 22H (corresponding to an exit of the upstream passage 22K). The cross-sectional surface of the entrance 22L, which is perpendicular to the moving direction R2 of the food dough D2, has a circular shape having a diameter S3, and the cross-sectional surface of the entrance 22N has a circular shape having a diameter S4. Since the diameter S4 is smaller than the diameter S3, the upstream passage 22K has a circular truncated cone shape (a tapered shape) so that the area of the cross-sectional surface perpendicular to the moving direction R2 decreases toward the downstream side. The length of the upstream passage 22K in the moving direction R2 is L3.

The extruding port 22M has the shape corresponding to the shape of the pieces P2 of the food dough as viewed from above. In the second embodiment, the extruding port 22M has a circular shape having a diameter S4.

The cross-sectional surface of the downstream passage 22H, which is perpendicular to the moving direction R2, maintains the same shape as that of the extruding port 22M, and the downstream passage 22H forms a cylindrical shape from the extruding port 22M to the entrance 22N of the downstream passage 22H. The length of the downstream passage 22H in the moving direction R2 is defined as L4. Further, the length between the lower surface 22P of the extruding nozzle 22E and the lower surface 2P of the extruding nozzle 2E is defined as L5.

An agitator 31, which is a flow straightener, is disposed at the upstream side of the extruding nozzle 2E of the passage T1. The agitator 31 straightens the flow of the first food dough D1 so that the flow rate and the density of the first food dough D1 become uniform and feeds the first food dough D1 to the extruding nozzle 2E.

The agitator 31 used here is an annular member rotatably disposed in the cross-sectional surface of the passage T1. The agitator 31 comprises a plurality of plate-like or rod-like fins, as agitating members, disposed at the inside of the agitator 31, which is the space, wherein the first food dough D1 pass, and a gear integrally disposed at the outside of the agitator 31. The gear engages with a driving gear disposed at the outside of the extruding nozzle 2E. By rotating the driving gear, the fins of the agitator 31 rotate in the cross-sectional surface of the passage T1.

In the second embodiment, although it is explained that the agitator 31 is used as a flow straightener, the filer 11 used in the first embodiment can be used. Further, in the second embodiment, the flow straightener is not used in the passage T2 of the second food dough D2. However, the filter 11 used in the first embodiment can be disposed in the passage T2 of the inner cylinder 22G depending on properties of the second food dough D2.

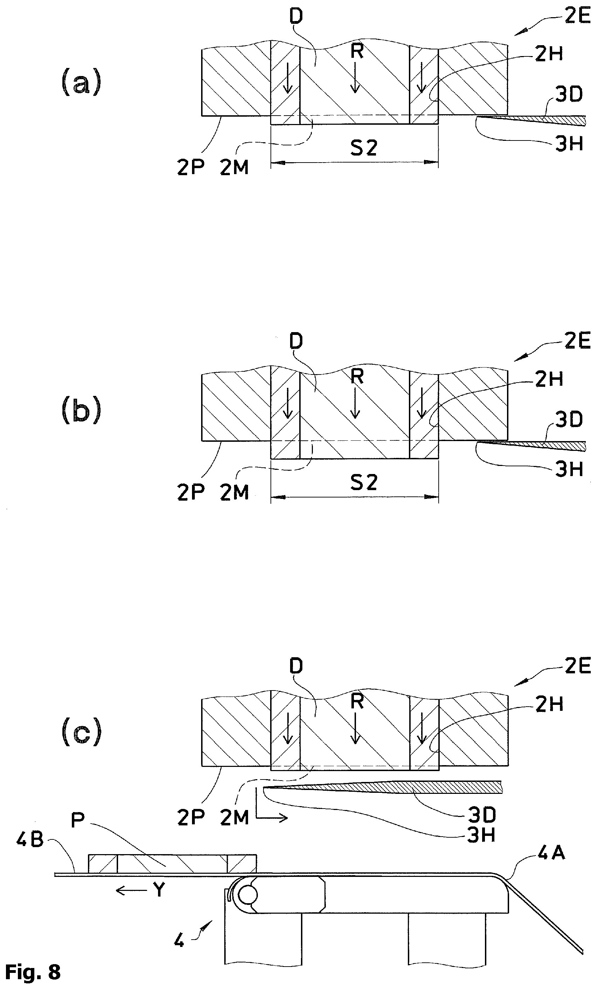

Next, based on Figs. 7, and 8(a), (b), and (c), processes for forming the pieces P2 of the food dough by using the apparatus 21 of the second embodiment are explained below.

The first food dough D1 supplied from the first supplying device 2A and the second food dough D2 supplied from the second supplying device 22A are fed to the combining nozzle 22B. The first food dough D1 is fed to the extruding nozzle 2E through the passage T1, while straightening the flow of the first food dough D1 by the agitator 31 so that the flow rate and the density of the first food dough D1 become uniform. The second food dough D2 is fed to the extruding nozzle 22E through the passage T2. The second food dough D2 is extruded from the extruding port 22M into the inside of the first food dough D1. Then, the combined food dough D is fed into the downstream passage 2H toward the extruding port 2M. Since the extruding port 22M is located in the downstream passage 2H, the pressure to the first food dough D1 near the extruding port 22M is increased. Thus, since the second food dough D2 is extruded into the inside of the first food dough D1, the first food dough D1 and the second food dough D2 adhere each other while passing through the passage having the length L5 between the lower surface 22P of the extruding nozzle 22E and the lower surface 2P of the extruding nozzle 2E. Then, the first food dough D1 and the second food dough D2 form the laminated food dough D, and it is fed toward the extruding port 2M (see Fig. 8 (a).).

The same as the case in the first embodiment, since the laminated food dough D is compressed when passing through the upstream passage 2G, the laminated food dough D is elastically deformed when entering into the downstream passage 2H. While the laminated food dough D passes the downstream passage 2H, the elastic deformation decreases, then it is extruded from the extruding port 2M. For that reason, the laminated food dough D is extruded from the extruding port 2M so as to have the shape nearly identical to that of the extruding port 2M without expanding in a radial direction. Further, the same as the case in the first embodiment, since the food dough is extruded at nearly the same flow rate at everywhere of the extruding port 2M, the central part of the food dough D does not protrude downward. (see Fig. 8 (b).). The laminated food dough D extruded from the extruding port 2M is cut with desired thickness by the cutting device 3, and the pieces P2 of the food dough are formed. Since the laminated food dough D is cut by the cutting device 3 while keeping the condition explained above, the cut pieces P2 having nearly uniform thickness can be formed (see Fig. 8 (c).). The cut pieces P2 are carried in the carrying direction Y by the conveyor 4.

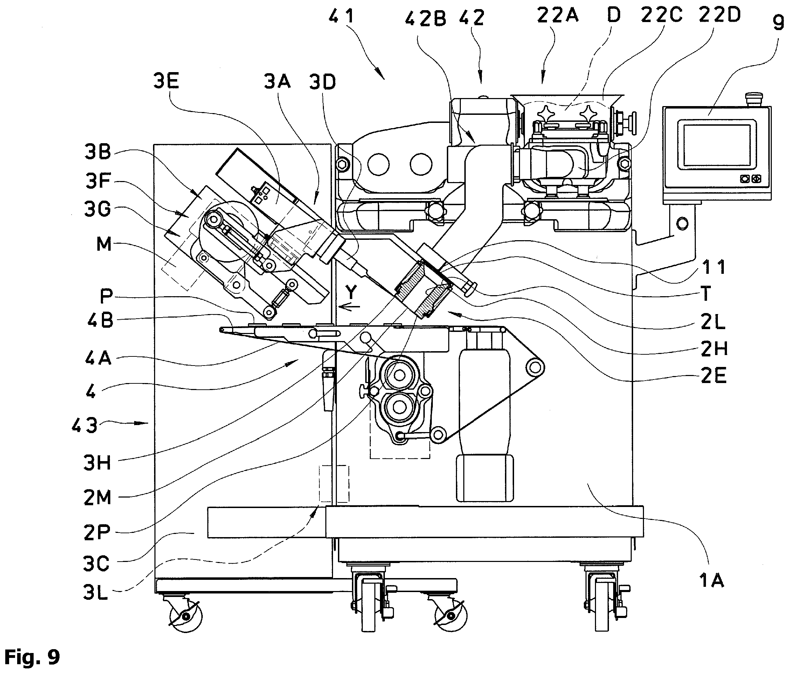

Next, based on Fig. 9, an apparatus 41 of a third embodiment of the invention is explained below. The denotations as used in the above explanations are used for the corresponding constituent objects, and the overlapping explanations are omitted.

The apparatus 41 is used to cut thin pieces P from food dough D.

The apparatus 41 comprises a box-type frame 1A, an extruding device 42 to extrude the food dough D, a cutting device 43, a conveyor 4, and a controlling system 9.

The extruding device 42 is used to continuously extrude the food dough D obliquely downward and comprises a supplying device 22A to supply the food dough D, which is disposed at the upper part of the frame 1A, and a pipe 42B, which is a nozzle unit and is disposed at the front of the frame 1A. The pipe 42B is disposed between the outlet port of the pump 22D and the position above the carrying surface 4B of the conveyor 4. The pipe 42B forms a passage T of the food dough D. An extruding nozzle 2E is disposed at the exit of the passage T, which corresponds to the exit of the pipe 42B. Further, a filter 11, which is a flow straightener, is disposed at the upstream side of the extruding nozzle 2E of the passage T of the food dough D.

In the third embodiment, the lower surface 2P of the extruding nozzle 2E (corresponding to the extruding port 2M) is inclined to the carrying surface 4B. Thus, the food dough D is extruded obliquely downward toward the carrying surface 4B.

The cutting device 33 is used to cut the pieces P from the food dough D that is extruded obliquely downward from the extruding port 2M of the extruding nozzle 2E to the carrying surface 4B.
The cutting device 33 has the same constitution as that of the cutting device 3 of the first embodiment, however, the moving direction of the cutting blade 3D when cutting the food dough D is the direction along the inclined lower surface 2P of the extruding nozzle 2E. Since the operation of the cutting blade 3D is the same as that of the cutting device 3 of the first embodiment, the detailed explanation of it is omitted.

In the apparatus 41 of the third embodiment, the same effects as those of the first and the second embodiment can be achieved.
Since the food dough D extruded from the extruding port 2M of the extruding nozzle 2E maintains the same shape as that of the extruding port 22M and is cut by the cutting device 3 while maintaining the flat surface of the distal end of the food dough D, the cut pieces P having nearly uniform thickness can be formed.

Although the apparatuses of the embodiments of the invention are explained above, they are not limited to those. In the constitution described in the clams, various modifications can be achieved, and those modifications are included in the claims.

As the constitution of the passage T of the food dough D, the nozzle unit 2B of the first embodiment, the combining nozzle 22B of the second embodiment, and the pipe 42B of the third embodiment are illustrated as examples. However, other types of the passages can be used, if the passage T of food dough D can be formed. Further, in the second embodiment, the apparatus 21 is explained as it is used to form the pieces from the combined food dough made of two different food dough. However, it is possible to use the combined food dough made of more than three different food dough by adding supplying devices of extruding devices.

In the embodiments explained above, although it is explained that the ultrasonic-vibrating cutter is used as a cutting blade of a cutting device, the cutting blade is not limited to that. A flat blade and a cutting wire can be used for the cutting blade.
Further, although it is explained that the cutting device is used to cut the food dough in the direction perpendicular to the moving direction of the food dough, the cutting direction is not limited to that. The food dough can be cut in any direction other than the direction perpendicular to the moving direction of the food dough. In this case, it is desirable that the lower surface of the extruding nozzle is inclined in any direction other than the direction perpendicular to the moving direction of the food dough, and the cutting blade is moved forward along the lower surface of the extruding nozzle to cut the food dough. Even in that case, since the food dough is extruded at nearly the same flow rate at everywhere of the extruding port, the pieces of the food dough having enough uniformity of thickness can be formed.

Next, results of evaluation tests for cutting the pieces of the food dough are explained below, which tests were performed to evaluate uniformity of thickness of the cut pieces of the food dough in the developmental process of the apparatus for forming the pieces of the food dough.

In the evaluation tests for cutting the pieces of the food dough, the apparatus having the constituents explained in the apparatus 1 of the first embodiment except for the constituents explained below was used, and cookie dough as the food dough was used. Further, the extruding port 2M of the extruding nozzle 2E having a circular shape was used to form the pieces P having a thin plate-like and circular shape.

In the evaluation tests for cutting the pieces, seven different types (No.1 - No.7) of the extruding nozzle 2E were manufactured by changing the dimensions of the length L1 of the upstream passage of the extruding nozzle 2E, the length L2 of the downstream passage, the diameter S1 of the entrance of the upstream passage, and the maximum distance S2 in a straight line of the extruding port and were provided for the evaluation tests. The specifications of different types (No. 1 - No.7) of the extruding nozzle are shown in Table 1.

[Table 1]

Table 1

| Types of the Extruding Nozzles | S1 mm | S2 mm | L1 mm | L2 mm | L2/S2 | L2/L1 |
|---|---|---|---|---|---|---|
| No. 1 | 85 | 38 | 38 | 6 | 0.16 | 0.16 |
| No. 2 | 85 | 42 | 38 | 8 | 0.19 | 0.21 |
| No. 3 | 85 | 38 | 38 | 11 | 0.29 | 0.29 |
| No. 4 | 85 | 38 | 50 | 60 | 1.32 | 0.83 |
| No. 5 | 115 | 55 | 30 | 120 | 2.18 | 4 |

(continued)

| Types of the Extruding Nozzles | S1 mm | S2 mm | L1 mm | L2 mm | L2/S2 | L2/L1 |
|---|---|---|---|---|---|---|
| No. 6 | 115 | 45 | 30 | 120 | 2.67 | 4 |
| No. 7 | 115 | 35 | 30 | 120 | 3.43 | 4 |

In the evaluation tests for cutting the pieces of the food dough, 20 pieces of the food dough were formed by every seven different types of the extruding nozzles, then they were baked. Further, the uniformity of the thickness of the pieces after forming and baking were evaluated.

In this specification, the uniformity of the thickness of the pieces is evaluated by using <Rank A>, <Rank B>, <Rank C>, and<Rank D>, each of which is defined by a ratio of uniformity of thickness as explained below. Namely, the ratio of the uniformity of the thickness is defined as following equation:

[a maximum dimension of an area having uniform thickness of the pieces]/[a maximum dimension of the pieces] x 100 (%) Further, when the ratio of the uniformity is 80 % or more, <Rank A> is used, when the ratio of the uniformity is 60 % or more and less than 80%, <Rank B> is used, when the ratio of the uniformity is 30 % or more and less than 50 %, <Rank C> is used, and when the ratio of the uniformity is less than 30 %, <Rank D> is used.

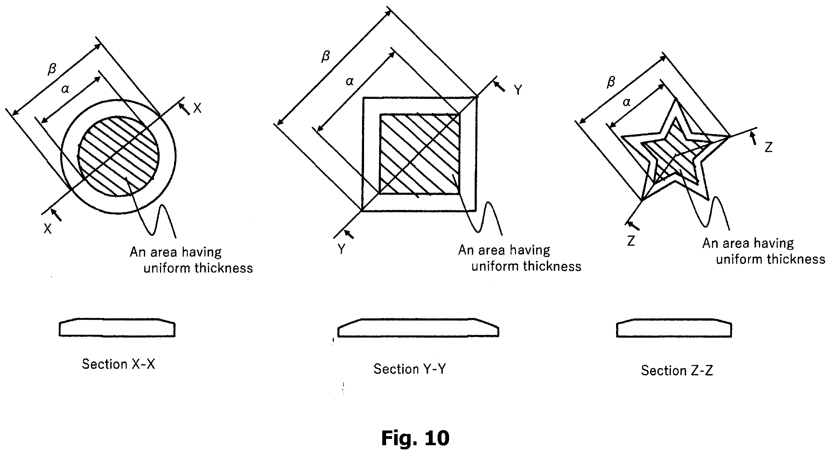

In this specification, [the maximum dimension of the area having uniform thickness of the pieces] and [the maximum dimension of the pieces] of the pieces having the circular, rectangular, and starlike shape are defined as a and $\beta$, respectively, as shown in Fig. 10.

The results of the evaluation tests for cutting the pieces are shown in Table 2. In the evaluation tests shown in Table 2, the filter or the agitator as the flow straightener was not used.

[Table 2]

Table 2

| Types of the Extruding Nozzles | L2/S2 | L2/L1 | uniformity of thickness after forming | uniformity of thickness after baking |
|---|---|---|---|---|
| No. 1 | 0.16 | 0.16 | <Rank D> | <Rank D> |
| No. 2 | 0.19 | 0.21 | <Rank D> | <Rank D> |
| No. 3 | 0.29 | 0.29 | <Rank C> | <Rank D> |
| No. 4 | 1.32 | 0.83 | <Rank A> | <Rank B> |
| No. 5 | 2.18 | 4 | <Rank A> | <Rank B> |
| No. 6 | 2.67 | 4 | <Rank A> | <Rank A> |
| No. 7 | 3.43 | 4 | <Rank A> | <Rank A> |

From the results of the evaluation tests shown in Table 2, excellent effects were discovered. Namely, 60 % or more of the uniformity of the thickness of pieces could be achieved, not only after forming but also after baking, when [the length L2 of the downstream passage] / [the maximum distance S2 in the straight line of the extruding port]>1 or [the length L2 of the downstream passage] / [the length L1 of the upstream passage] >1.

In other words, when [the length L2 of the downstream passage] is longer than [the maximum distance S2 in the straight line of the extruding port], or when [the length L2 of the downstream passage] is longer than [the length L1 of the upstream passage], the excellent effects were discovered such that 60 % or more of the uniformity of the thickness of pieces could be achieved, not only after forming but also after baking.

In addition, by using the filter or the agitator as the flow straightener in the apparatus, it was discovered that the ratio of the uniformity of the thickness further increased.

Further, in case that the pieces of the food dough had the rectangular or the starlike shape, it was confirmed that the same effects as those of the pieces having the circular shape could be achieved.

Explanations of Denotations

| 1, 21, 41 | an apparatus for forming pieces of food dough |
|---|---|
| 2, 22, 42 | an extruding device |
| 3, 43 | a cutting device |
| 4 | a conveyor |
| 9 | a controlling system |
| 2B | a nozzle unit |
| 22B | a combining nozzle unit |
| 2E, 22E | an extruding nozzle |
| 2G, 22K | an upstream passage |
| 2H, 22H | a downstream passage |
| 2K, 22L | an entrance of an upstream passage |
| 2L, 22N | an exit of an upstream passage (an entrance of a downstream passage) |
| 2M, 22M | an extruding port |
| 3A | an ultrasonic-vibrating cutter |
| 3B | a moving mechanism |
| 3D | a cutting blade |
| 11 | a filter |
| 11A | holes |
| 31 | an agitator |
| L1 | a length of an upstream passage |
| L2 | a length of a downstream passage |
| S1 | a diameter of an entrance of an upstream passage |
| S2 | a maximum distance in a straight line of an extruding port |
| T | a passage for food dough |
| D | food dough |
| P | pieces of food dough |

**Claims**

1. An apparatus (1, 21, 41) for forming pieces (P) of food dough (D), comprising:

    an extruding device (2, 22, 42) to extrude the food dough (D), and
    a cutting device (3, 43) to cut the pieces (P) of the food dough (D), wherein the extruding device (2, 22, 42) comprises a passage (T) to feed the food dough (D),
    wherein the passage (T) comprises an upstream passage (2G, 22K) having a cross-sectional shape perpendicular to a moving direction of the food dough (D) that becomes narrower from the upstream towards the downstream of the upstream passage (2G, 22K) and
    a downstream passage (2H, 22H) that is connected to the exit (2L, 22N) of the upstream passage (2G, 22K), which corresponds to the downstream end of the upstream passage (2G, 22K), has a constant cross-sectional shape, and extends to the extruding port (2M, 22M) of the extruding device (2, 22, 42), **characterized in that** the length (L2, L4) of the downstream passage (2H, 22H) in the moving direction of the food dough (D) is longer than the maximum distance (S2, S4) in a straight line of the extruding port (2M, 22M),
    and **in that** the passage (T) further comprises a flow straightener to straighten the flow of the food dough (D) that is disposed at the upstream side of the upstream passage (2G, 22K), wherein the flow straightener is a thin plate-like filter (11) that is disposed so as to cross the passage (T) and has a plurality of holes (11A).

2. The apparatus (1, 21, 41) for forming the pieces (P) of the food dough (D) according to claim 1, wherein the extruding device (2, 22, 42) comprises an extruding nozzle (2E, 22E), and the downstream passage (2H, 22H) is formed in the extruding nozzle (2E, 22E).

3. The apparatus (1, 21, 41) for forming the pieces (P) of the food dough (D) according to claim 2, wherein the upstream passage (2G, 22K) is formed in the extruding nozzle (2E, 22E).

4. The apparatus (1, 21, 41) for forming the pieces (P) of the food dough (D) according to any of claims 1 - 3, wherein the length (L2, L4) of the downstream passage (2H, 22H) in the moving direction of the food dough (D) is longer than the length (L1, L3) of the upstream passage (2G, 22K) in the moving direction of the food dough (D).

5. The apparatus (1, 21, 41) for forming the pieces (P) of the food dough (D) according to any of claims 1 - 3, wherein the extruding device (2, 22, 42) comprises a second extruding nozzle (22E) to extrude second food dough (D) that is disposed in the passage (T).

6. The apparatus (1, 21, 41) for forming the pieces (P) of the food dough (D) according to claim 5, wherein the exit of the second extruding nozzle (22E) to extrude the second food dough (D) is disposed inside the downstream passage (2H, 22H).

7. The apparatus (1, 21, 41) for forming the pieces (P) of the food dough (D) according to any of claims 1 - 3, wherein the cutting device (3, 43) comprises a cutting blade (3D) to cut the food dough (D) into the pieces (P) of the food dough (D) and a moving mechanism (3B) to move the cutting blade (3D) forward from an initial position, then to move the cutting blade (3D) downward, and then to move the cutting blade (3D) back to the initial position.

8. The apparatus (1, 21, 41) for forming the pieces (P) of the food dough (D) according to claim 7, wherein the cutting blade (3D) is an ultrasonic-vibrating cutter (3A).

9. The apparatus (1, 21, 41) for forming the pieces (P) of the food dough (D) according to any of claims 1 - 3, further comprising:

a fixing mechanism to combine the extruding device (2, 22, 42) and the cutting device (3, 43);
a detecting device to detect that the extruding device (2, 22, 42) and the cutting device (3, 43) are combined; and
a controlling system to control to allow to drive the extruding device (2, 22, 42) and the cutting device (3, 43) when the detecting device transmits a detecting signal.

**Patentansprüche**

1. Vorrichtung (1, 21, 41) zur Herstellung von Stücken (P) eines Teigs (D), umfassend:

eine Extrudiereinrichtung (2, 22, 42) zum Extrudieren des Teigs (D), und
eine Schneideinrichtung (3, 43) zum Schneiden der Stücke (P) des Teigs (D), wobei die Extrudiereinrichtung (2, 22, 42) einen Durchgang (T) zum Zuführen des Teigs (D) umfasst,
wobei der Durchgang (T) einen stromaufwärtigen Durchgang (2G, 22K) umfasst, der eine Querschnittsform senkrecht zu einer Bewegungsrichtung des Teigs (D) aufweist, die vom stromaufwärtigen zum stromabwärtigen Ende des stromaufwärtigen Durchgangs (2G, 22K) schmaler wird, und
einen stromabwärtigen Durchgang (2H, 22H), der mit dem Austritt (2L, 22N) des stromaufwärtigen Durchgangs (2G, 22K) verbunden ist, welcher dem stromabwärtigen Ende des stromaufwärtigen Durchgangs (2G, 22K) entspricht, eine konstante Querschnittsform aufweist und sich bis zur Extrudieröffnung (2M, 22M) der Extrudiereinrichtung (2, 22, 42) erstreckt,
**dadurch gekennzeichnet, dass** die Länge (L2, L4) des stromabwärtigen Durchgangs (2H, 22H) in der Bewegungsrichtung des Teigs (D) länger ist als der maximale Abstand (S2, S4) in einer geraden Linie der Extrudieröffnung (2M, 22M), und
dadurch, dass der Durchgang (T) ferner einen Strömungsgleichrichter zum Richten der Strömung des Teigs (D) umfasst, der an der stromaufwärtigen Seite des stromaufwärtigen Durchgangs (2G, 22K) angeordnet ist, wobei der Strömungsgleichrichter ein dünner plattenförmiger Filter (11) ist, der so angeordnet ist, dass er den Durchgang (T) kreuzt, und der eine Mehrzahl von Löchern (11A) aufweist.

2. Vorrichtung (1, 21, 41) zur Herstellung der Stücke (P) des Teigs (D) nach Anspruch 1, wobei die Extrudiereinrichtung (2, 22, 42) eine Extrudierdüse (2E, 22E) umfasst und der stromabwärtige Durchgang (2H, 22H) in der Extrudierdüse (2E, 22E) ausgebildet ist.

3. Vorrichtung (1, 21, 41) zur Herstellung der Stücke (P) des Teigs (D) nach Anspruch 2, wobei der stromaufwärtige Durchgang (2G, 22K) in der Extrudierdüse (2E, 22E) ausgebildet ist.

4. Vorrichtung (1, 21, 41) zur Herstellung der Stücke (P) des Teigs (D) nach einem der Ansprüche 1 bis 3, wobei die Länge (L2, L4) des stromabwärtigen Durchgangs (2H, 22H) in der Bewegungsrichtung des Teigs (D) länger ist als die Länge (L1, L3) des stromaufwärtigen Durchgangs (2G, 22K) in der Bewegungsrichtung des Teigs (D).

5. Vorrichtung (1, 21, 41) zur Herstellung der Stücke (P) des Teigs (D) nach einem der Ansprüche 1 bis 3, wobei die Extrudiereinrichtung (2, 22, 42) eine zweite Extrudierdüse (22E) umfasst, um zweiten Teig (D) zu extrudieren, der im Durchgang (T) angeordnet ist.

6. Vorrichtung (1, 21, 41) zur Herstellung der Stücke (P) des Teigs (D) nach Anspruch 5, wobei der Austritt der zweiten Extrudierdüse (22E) zum Extrudieren des zweiten Teigs (D) innerhalb des stromabwärtigen Durchgangs (2H, 22H) angeordnet ist.

7. Vorrichtung (1, 21, 41) zur Herstellung der Stücke (P) des Teigs (D) nach einem der Ansprüche 1 bis 3, wobei die Schneideinrichtung (3, 43) eine Schneidklinge (3D) zum Schneiden des Teigs (D) in die Stücke (P) des Teigs (D) und einen Bewegungsmechanismus (3B) umfasst, um die Schneidklinge (3D) von einer Ausgangsposition vorwärts zu bewegen, dann die Schneidklinge (3D) nach unten zu bewegen und dann die Schneidklinge (3D) zurück in die Ausgangsposition zu bewegen.

8. Vorrichtung (1, 21, 41) zur Herstellung der Stücke (P) des Teigs (D) nach Anspruch 7, wobei die Schneidklinge (3D) ein ultraschallvibrierender Schneider (3A) ist.

9. Vorrichtung (1, 21, 41) zur Herstellung der Stücke (P) des Teigs (D) nach einem der Ansprüche 1 bis 3, ferner umfassend:

   einen Befestigungsmechanismus, um die Extrudiereinrichtung (2, 22, 42) und die Schneideinrichtung (3, 43) zu verbinden;
   eine Erfassungseinrichtung, um zu erfassen, dass die Extrudiereinrichtung (2, 22, 42) und die Schneideinrichtung (3, 43) verbunden sind; und
   ein Steuerungssystem zum Steuern derart, dass der Antrieb der Extrudiereinrichtung (2, 22, 42) und der Schneideinrichtung (3, 43) ermöglicht wird, wenn die Erfassungseinrichtung ein Erfassungssignal überträgt.

**Revendications**

1. Appareil (1, 21, 41) servant à former des morceaux (P) de pâte alimentaire (D), comprenant:

   un dispositif d'extrusion (2, 22, 42) pour extruder la pâte alimentaire (D), et
   un dispositif de coupe (3, 43) pour couper les morceaux (P) de la pâte alimentaire (D), le dispositif d'extrusion (2, 22, 42) comprenant un passage (T) pour alimenter la pâte alimentaire (D),
   dans lequel le passage (T) comprend un passage amont (2G, 22K) se présentant sous une forme en coupe transversale perpendiculaire à une direction de déplacement de la pâte alimentaire (D) qui devient plus étroite de l'amont vers l'aval du passage amont (2G, 22K) et
   un passage aval (2H, 22H) qui est relié à la sortie (2L, 22N) du passage amont (2G, 22K), qui correspond à l'extrémité aval du passage amont (2G, 22K), se présente sous une forme en coupe transversale constante et s'étend jusqu'à l'orifice d'extrusion (2M, 22M) du dispositif d'extrusion (2, 22, 42), **caractérisé en ce que** la longueur (L2, L4) du passage aval (2H, 22H) dans la direction de déplacement de la pâte alimentaire (D) est supérieure à la distance maximale (S2, S4) en ligne droite de l'orifice d'extrusion (2M, 22M),
   et **en ce que** le passage (T) comprend en outre un guide canalisant l'écoulement pour guider l'écoulement de la pâte alimentaire (D) qui est disposé du côté amont du passage amont (2G, 22K), le redresseur d'écoulement étant un filtre mince en forme de plaque (11) qui est disposé de manière à traverser le passage (T) et comporte une pluralité de trous (11A).

2. Appareil (1, 21, 41) servant à former des morceaux (P) de la pâte alimentaire (D) selon la revendication 1, dans lequel le dispositif d'extrusion (2, 22, 42) comprend une buse d'extrusion (2E, 22E), et le passage aval (2H, 22H) est formé dans la buse d'extrusion (2E, 22E).

3. Appareil (1, 21, 41) servant à former des morceaux (P) de la pâte alimentaire (D) selon la revendication 2, dans lequel le passage amont (2G, 22K) est formé dans la buse d'extrusion (2E, 22E).

4.  Appareil (1, 21, 41) servant à former des morceaux (P) de la pâte alimentaire (D) selon l'une quelconque des revendications 1 à 3, dans lequel la longueur (L2, L4) du passage aval (2H, 22H) dans la direction de déplacement de la pâte alimentaire (D) est supérieure à la longueur (L1, L3) du passage amont (2G, 22K) dans la direction de déplacement de la pâte alimentaire (D).

5.  Appareil (1, 21, 41) servant à former des morceaux (P) de la pâte alimentaire (D) selon l'une quelconque des revendications 1 à 3, dans lequel le dispositif d'extrusion (2, 22, 42) comprend une deuxième buse d'extrusion (22E) pour extruder une deuxième pâte alimentaire (D) qui est placée dans le passage (T).

6.  Appareil (1, 21, 41) servant à former des morceaux (P) de la pâte alimentaire (D) selon la revendication 5, dans lequel la sortie de la deuxième buse d'extrusion (22E) pour extruder la deuxième pâte alimentaire (D) est disposée à l'intérieur du passage aval (2H, 22H).

7.  Appareil (1, 21, 41) servant à former des morceaux (P) de la pâte alimentaire (D) selon l'une quelconque des revendications 1 à 3, dans lequel le dispositif de coupe (3, 43) comprend une lame de coupe (3D) pour couper la pâte alimentaire (D) en morceaux (P) de pâte alimentaire (D) et un mécanisme de déplacement (3B) pour déplacer la lame de coupe (3D) vers l'avant à partir d'une position initiale, puis pour déplacer la lame de coupe (3D) vers le bas, puis pour ramener la lame de coupe (3D) à la position initiale.

8.  Appareil (1, 21, 41) servant à former des morceaux (P) de la pâte alimentaire (D) selon la revendication 7, dans lequel la lame de coupe (3D) est un couteau à vibrations ultrasonores (3A).

9.  Appareil (1, 21, 41) servant à former des morceaux (P) de la pâte alimentaire (D) selon l'une quelconque des revendications 1 à 3, comprenant en outre :

    un mécanisme de fixation pour associer le dispositif d'extrusion (2, 22, 42) et le dispositif de coupe (3, 43) ;
    un dispositif de détection pour détecter que le dispositif d'extrusion (2, 22, 42) et le dispositif de coupe (3, 43) sont associés; et
    un système de commande pour commander l'entraînement du dispositif d'extrusion (2, 22, 42) et du dispositif de coupe (3, 43) lorsque le dispositif de détection transmet un signal de détection.

Fig. 1

EP 4 173 487 B1

Fig. 2

(a)

2M

S2

(b)

S2

2M

(c)

S2

2M

Fig. 3

Fig. 4

**Fig. 5**

**Fig. 6**

EP 4 173 487 B1

Fig. 7

**Fig. 8**

**Fig. 9**

EP 4 173 487 B1

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4687429 A
- WO 2016199642 A1
- JP 4274569 B
- JP 6166494 B
- US 3314381 A
- US 5123830 A
- EP 3395174 A1
- WO 2016199642 A
- JP S59151829 A